# EUROPEAN PATENT APPLICATION

(11) **EP 4 815 263 A1**
(43) Date of publication of application: **30.09.2026**
(21) Application number: 24939846.2
(22) Date of filing: 17.06.2024
(51) Int. Cl.: H02K 1/2795, H02K 21/22, H02K 16/02, H02K 1/28, H02K 9/04, H02K 21/24, H02K 1/32

(54) **AXIAL TYPE MOTOR**

(30) Priority: 23.05.2024 KR 20240066867; 23.05.2024 KR 20240066868
(71) Applicant: Eflow Co., Ltd., Changwon-si, Gyeongsangnam-do 51541 (KR)
(72) Inventor: YOUN, Su Han, Haman-gun Gyeongsangnam-do 52043 (KR); CHOI, Seung Ho, Changwon-si Gyeongsangnam-do 51288 (KR)
(74) Representative: BCKIP Part mbB
(86) International application number: PCT/KR2024/008314
(87) International publication number: WO 2025/244171

(57) **Abstract**

An axial flux motor is provided. An axial flux motor according to an embodiment of the present invention includes a motor housing defining an internal space, a shaft rotatably provided in the internal space, a stator disposed to be fixed to the motor housing in the internal space and including a stator core, a coil, and a stator bracket, and a rotor fixedly coupled to the shaft and disposed to face the stator in an axial direction and including a rotor base plate and a plurality of permanent magnets, wherein the rotor base plate includes a first surface facing the stator and a second surface opposite to the first surface, and has a vortex-forming groove formed in the second surface to generate a vortex.

## Description

### TECHNICAL FIELD

The present invention relates to an axial flux motor.

### BACKGROUND ART

Recently, as the number of vehicles has increased and operating a personal vehicle has become difficult, the number of people using public transportation or movable small mobility devices has been increasing.

As small mobility devices, electric bicycles, electric kickboards, and electric mini bikes are representatively used, and among these, the demand for electric bicycles is increasing.

Such a small mobility device has a structure in which an axial type motor capable of reducing a length in an axial direction is mounted, and a wheel is rotated by a rotational force of the motor.

Describing the structure of a general axial flux motor, the axial flux motor is a motor in which a flow of magnetic flux is formed in an axial direction, and has a high power density and a motor diameter larger than its axial length, so that a relatively large number of poles can be designed, and thus it has a structure suitable for high-frequency or low-speed driving.

Such an axial flux motor includes a stator forming a magnetic field and a rotor configured to be rotatable with respect to the stator.

The stator includes a plurality of cores that are disposed at predetermined intervals along a circumferential direction and protrude at a predetermined height in an axial direction, and the cores are coupled in the axial direction to grooves formed in a stator bracket.

The rotor includes permanent magnets arranged at predetermined intervals along a circumferential direction, and is configured to rotate while forming a constant air gap with the stator.

However, after the motor is operated and the rotor operates, high heat is easily accumulated inside the motor housing, and since a cooling structure for rapidly dissipating the high heat generated by the operation of the motor is not provided, the magnetic force of the magnets is attenuated due to the high heat accumulated inside the motor, so that the operating efficiency of the motor gradually decreases.

In addition, when the temperature rises to a certain level, the insulating material of the armature winding in the armature is damaged, causing a short circuit of the armature winding, which may cause a risk of fire in the entire motor.

In order to prevent such a problem, a cooling blade fan is generally mounted on one end of a central rotation shaft of the motor to suppress a temperature rise of the motor.

However, such a technique merely causes a forward airflow of the cooling blade fan to graze an outer surface of the housing of the motor, and substantially cannot cause the forward airflow to directly enter the inside of the housing, so that the inside of the motor cannot be cooled rapidly and effectively.

In addition, the axial flux motor generates a rotational torque by generating a repulsive force or an attractive force between the core and the permanent magnet of the rotor by switching a direction of a current flowing through the coil wound around the core.

However, a general permanent magnet is formed integrally and provided in a shape corresponding to the core, but a region where a magnetic field is strongly generated and a region where a magnetic field is weakly generated are formed to have the same thickness, and thus there is a problem in that the rotational efficiency of the rotor decreases depending on the weight and shape of the permanent magnet.

Under the above-described background, the present invention proposes an axial flux motor capable of improving rotational efficiency by performing cooling inside a motor housing to prevent heat from being accumulated, and by making the shape of a permanent magnet correspond to a position where a magnetic field is formed.

### SUMMARY OF THE INVENTION

### TECHNICAL PROBLEM

The present invention has been made to solve the above-described problems, and an object of the present invention is to provide an axial flux motor in which a rotor generates a vortex inside a motor housing to cool the inside of the motor housing.

In addition, another object of the present invention is to provide an axial flux motor in which a groove formed in a rotor disperses a force to prevent bending of the rotor.

In addition, another object of the present invention is to provide an axial flux motor including a permanent magnet formed in multiple steps.

The objects of the present invention are not limited to those mentioned above, and other objects not mentioned will be clearly understood by those skilled in the art from the following description.

### TECHNICAL SOLUTION

An axial flux motor according to an embodiment of the present invention includes a motor housing defining an internal space, a shaft rotatably provided in the internal space, a stator disposed to be fixed to the motor housing in the internal space and including a stator core, a coil, and a stator bracket, and a rotor fixedly coupled to the shaft and disposed to face the stator in an axial direction and including a rotor base plate and a plurality of permanent magnets, wherein the rotor base plate includes a first surface facing the stator and a second surface opposite to the first surface, and has a vortex-forming groove formed in the second surface to generate a vortex.

In addition, the vortex-forming groove may be provided in a plurality and disposed to be spaced apart from each other in a circumferential direction.

In addition, the vortex-forming groove may be formed radially about an axis of the rotor base plate.

In addition, the vortex-forming groove may be formed such that a depth of an inner region adjacent to a center of the rotor and a depth of an outer region adjacent to an outer periphery of the rotor are different from each other.

In addition, the vortex-forming groove may be formed such that the depth of the outer region is greater than the depth of the inner region.

In addition, the vortex-forming groove may be formed such that a width of the outer region adjacent to the outer periphery of the rotor is wider than a width of the inner region adjacent to the center of the rotor.

In addition, the rotor base plate may have a protruding member formed on the vortex-forming groove to generate turbulence.

In addition, the protruding member may be formed within the vortex-forming groove to be adjacent to the outer region rather than the inner region of the rotor.

In addition, the rotor base plate may have a through-hole formed in the vortex-forming groove to circulate air between the rotor and the stator.

An axial flux motor according to an embodiment of the present invention includes a motor housing defining an internal space, a shaft rotatably provided in the internal space, a stator disposed to be fixed to the motor housing in the internal space and including a stator core, a coil, and a stator bracket, and a rotor fixedly coupled to the shaft and disposed to face the stator in an axial direction and including a rotor base plate and a plurality of permanent magnets, wherein each of the permanent magnets is formed such that a thickness of an inner region adjacent to a center of the rotor and a thickness of an outer region adjacent to an outer periphery of the rotor are different from each other.

In addition, each of the permanent magnets may be formed such that the thickness of the outer region is greater than the thickness of the inner region.

In addition, each of the permanent magnets may be formed to have a thickness that gradually increases from the inner region toward the outer region.

In addition, each of the permanent magnets may be formed to have a width that gradually widens from the inner region toward the outer region.

In addition, each of the permanent magnets may be provided as a combination of a plurality of sub-permanent magnets having different sizes from each other, and arranged in a step shape.

In addition, the rotor may further include a fixing member coupling each of the permanent magnets to the rotor base plate, and the fixing member may be formed such that a surface contacting each of the permanent magnets has a shape inversely corresponding thereto.

In addition, the fixing member may be formed such that a sum of thicknesses of the fixing member and each of the permanent magnets is constant.

In addition, the fixing member may have a discharge groove formed in a contact surface with each of the permanent magnets, through which excess adhesive is discharged when each of the permanent magnets is coupled.

### ADVANTAGEOUS EFFECTS

According to an axial flux motor according to an embodiment of the present invention, a rotor generates a vortex inside the housing of the motor, so that the cooling efficiency of the motor can be improved.

In addition, according to an axial flux motor according to an embodiment of the present invention, a vortex-forming groove formed in a rotor disperses a force acting on a plane of the rotor at different angles, so that bending of the rotor is prevented and an air gap can be maintained between the rotor and the stator, thereby improving rotational efficiency.

In addition, the permanent magnets are disposed in different sizes depending on the intensity of the magnetic field, so that the rotational efficiency of the rotor can be improved.

In addition, the fixing member is provided in a shape inversely corresponding to the permanent magnet, so that a fixing force between the rotor and the permanent magnet is improved and an air gap can be maintained between the permanent magnet and the stator, thereby improving rotational efficiency.

The effects of the present invention are not limited to the effects described above, and effects not mentioned will be clearly understood by those skilled in the art to which the present invention pertains from the present specification and the accompanying drawings.

### BRIEF DESCRIPTION OF DRAWINGS

FIG. 1 is a perspective view of an axial flux motor according to an embodiment of the present invention.
FIG. 2 is an exploded perspective view of the axial flux motor according to an embodiment of the present invention.
FIG. 3 is an exploded perspective view of the stator included in the axial flux motor of FIG. 1.
FIG. 4 is an exploded perspective view of the rotor included in the axial flux motor of FIG. 1.
FIG. 5 is a perspective view of the second surface of the rotor included in the axial flux motor of FIG. 1.
FIG. 6 is a front view of the second surface of the rotor included in the axial flux motor of FIG. 1.
FIG. 7 is an exploded perspective view of the rotor illustrated in FIG. 2.
FIG. 8 is a front view of the first surface of the rotor illustrated in FIG. 2.
FIG. 9 is a side view of the permanent magnet and the fixing member illustrated in FIG. 7.
FIG. 10 is a side view illustrating a state in which the permanent magnet and the fixing member of FIG. 9 are coupled.

### DETAILED DESCRIPTION

The embodiments described in the present specification and the configurations illustrated in the drawings are merely preferred examples of the disclosed invention, and at the time of filing of the present application, there may be various modifications that can replace the embodiments and drawings of the present specification.

The same reference numerals or symbols presented in each drawing of the present specification indicate parts or components that perform substantially the same functions. The shapes and sizes of elements in the drawings may be exaggerated for clear explanation.

The terms used in the present specification are used to describe embodiments and are not intended to limit and/or restrict the disclosed invention. Singular expressions include plural expressions unless the context clearly indicates otherwise. In the present specification, terms such as "include" or "have" are intended to designate the presence of features, numbers, steps, operations, components, parts, or combinations thereof described in the specification, and do not preclude the possibility of the presence or addition of one or more other features, numbers, steps, operations, components, parts, or combinations thereof.

Terms including ordinal numbers such as "first" and "second" used in the present specification may be used to describe various components, but the components are not limited by the terms, and the terms are used only for the purpose of distinguishing one component from another component. For example, without departing from the scope of the present invention, a first component may be named a second component, and similarly, a second component may also be named a first component.

Hereinafter, an axial flux motor according to an embodiment of the present invention will be described in detail with reference to the drawings.

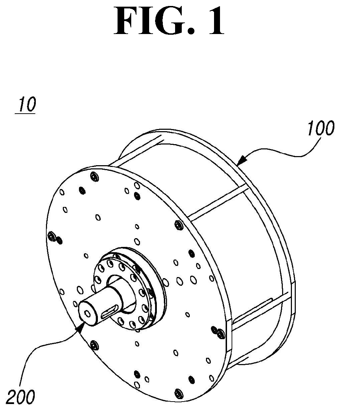

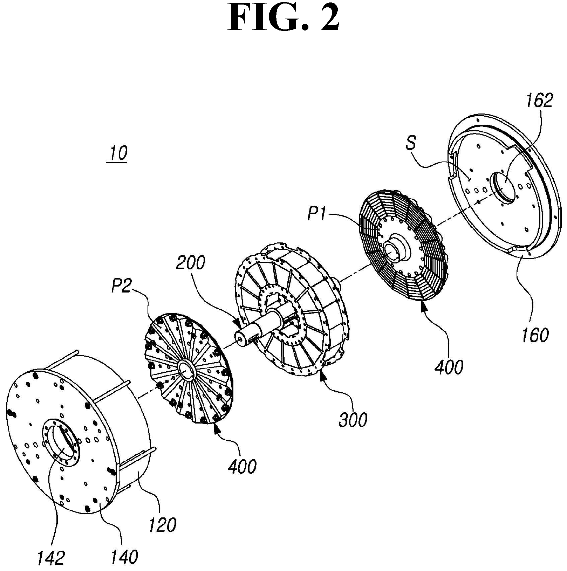

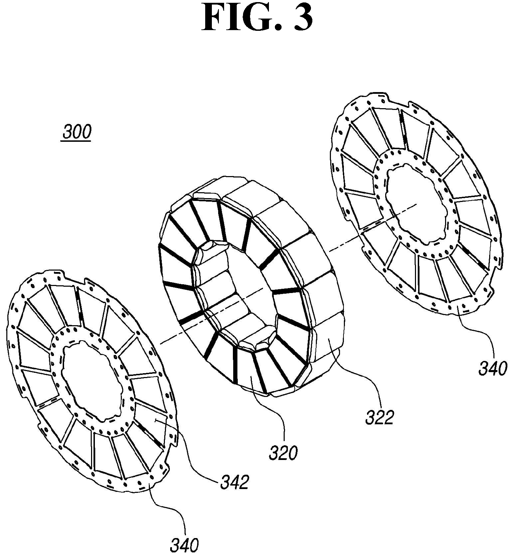

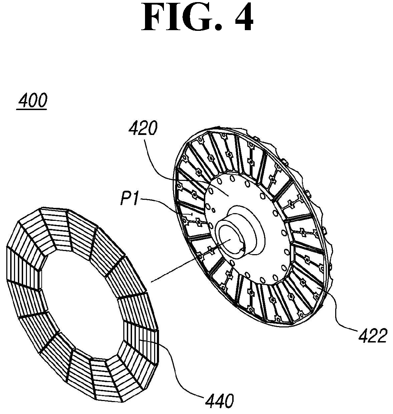

FIG. 1 is a perspective view of an axial flux motor according to an embodiment of the present invention, FIG. 2 is an exploded perspective view of the axial flux motor according to an embodiment of the present invention, FIG. 3 is an exploded perspective view of the stator included in the axial flux motor of FIG. 1, and FIG. 4 is an exploded perspective view of the rotor included in the axial flux motor of FIG. 1.

Referring to FIGS. 1 to 4, an axial flux motor 10 includes a motor housing 100, a shaft 200, a stator 300, and a rotor 400.

The motor housing 100 has an internal space S formed therein, in which the shaft 200, the stator 300, and the rotor 400, which will be described later, are provided. The motor housing 100 may include a housing 120, a front cover 140, and a rear cover 160.

The housing 120 has a cylindrical shape with a hollow formed therein. The housing 120 is coupled to the front cover 140 and the rear cover 160 to define the internal space S.

The front cover 140 and the rear cover 160 may be implemented in a circular plate shape. The front cover 140 and the rear cover 160 are coupled to both sides of an opening formed in the housing 120 to define the internal space S. The front cover 140 and the rear cover 160 have shaft through-holes 142 and 162 formed in an axial direction, through which the shaft 200 passes.

The shaft 200 is rotatably provided in the internal space S. The shaft 200 may be coupled to the motor housing 100 by a plurality of bearings (not shown).

The stator 300 is disposed in the internal space S of the motor housing 100. The stator 300 may be fixed to the motor housing 100. The stator 300 may have an outer side formed in a shape corresponding to an inner side of the motor housing 100. As illustrated in FIG. 3, the stator 300 includes a stator core 320, a coil 322, and a stator bracket 340.

A plurality of stator cores 320 may be provided. The stator cores 320 may each have the same shape. The stator cores 320 may be disposed to be spaced apart at predetermined intervals along a circumferential direction from a center.

The coil 322 is disposed on the stator core 320. The coil 322 may be wound on the stator core 320. Specifically, the coil 322 may be wound around an outer surface of each stator core 320 so as to generate magnetic flux in the axial direction. Accordingly, a permanent magnet 440 of the rotor 400 is rotated by a magnetic field generated when power is applied to the coil 322 and an alternating current flows therethrough.

The stator bracket 340 fixes the stator core 320. The stator bracket 340 may be formed of an insulator so that each stator core 320 and the coil 322 are not electrically connected. For example, the stator bracket 340 may be formed of ceramic, bakelite which is a thermosetting resin, or coated stainless steel.

The stator bracket 340 may have guide holes 342 formed therein, into which ends of the stator cores 320 are inserted and fixed. The guide hole 342 may guide the stator core 320 to be inserted in the axial direction. The guide holes 342 may be formed in a number corresponding to the stator cores 320. Specifically, the guide holes 342 may be disposed to be spaced apart at predetermined intervals along a circumferential direction from a center so as to correspond to the stator cores 320.

The stator brackets 340 may be provided as a pair to fix the stator core 320 from both sides. The stator bracket 340 may have a hollow formed in a central portion thereof in the axial direction, through which the shaft 200 passes.

The rotor 400 is provided in the internal space S of the housing 120. The rotor 400 is fixedly coupled to the shaft 200. The rotor 400 is disposed on one side of the stator 300. The rotor 400 is disposed to face the stator 300 in the axial direction. When power is supplied to the stator 300, the rotor 400 rotates by interacting with the stator 300. The rotor 400 includes a rotor base plate 420 and a permanent magnet 440.

The rotor base plate 420 is disposed to face the stator 300. Specifically, the rotor base plate 420 may be disposed to face the stator bracket 340.

The rotor base plate 420 has a permanent magnet coupling groove 422 formed therein, to which the permanent magnet 440 is coupled.

A plurality of permanent magnet coupling grooves 422 may be formed. The permanent magnet coupling grooves 422 may be formed along a circumferential direction of the rotor base plate 420. The permanent magnet coupling groove 422 may be formed in a first surface P1, among the first surface P1 facing the stator core 320 and a second surface P2 opposite to the first surface P1. In this case, the permanent magnet 440 may be coupled to the permanent magnet coupling groove 422 by a bolt. Alternatively, the permanent magnet 440 may be coupled to the permanent magnet coupling groove 422 with an adhesive.

The permanent magnet 440 causes the rotor 400 to rotate by a magnetic field when power is applied to the stator 300. A plurality of permanent magnets 440 are provided. The permanent magnets 440 may be provided in a number corresponding to the permanent magnet coupling grooves 422. The permanent magnets 440 may be disposed such that N poles and S poles are alternately exposed. When an odd number of permanent magnets 440 are provided, an adjacent pair among the plurality of permanent magnets may be disposed with the same pole, and thus, to prevent this, the permanent magnets 440 may be provided in an even number.

Although the above example has been described as one rotor 400 being disposed on one side of the stator 300, as illustrated in FIG. 2, the rotor 400 may be provided as a pair and disposed on both sides of the stator 300.

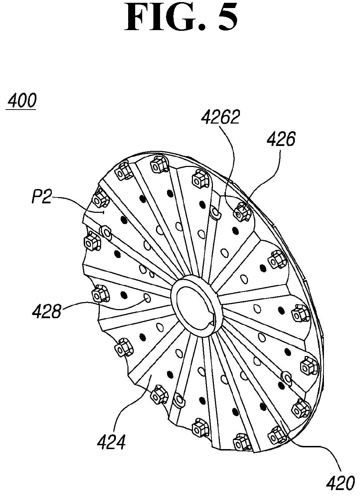

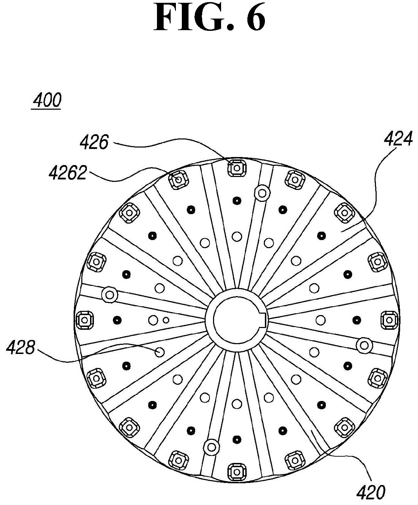

Hereinafter, the rotor base plate 420 will be described in more detail with reference to FIGS. 5 and 6.

FIG. 5 is a perspective view of the second surface of the rotor included in the axial flux motor of FIG. 1, and FIG. 6 is a front view of the second surface of the rotor included in the axial flux motor of FIG. 1.

Referring to FIGS. 5 and 6, the rotor base plate 420 has a vortex-forming groove 424 and a protruding member 426 formed therein.

The vortex-forming groove 424 generates a vortex when the rotor 400 rotates inside the motor 10, thereby cooling the inside of the motor 10. As illustrated in FIGS. 5 and 6, the vortex-forming groove 424 may be formed in the second surface P2, among the first surface P1 facing the stator 300 and the second surface P2 opposite to the first surface P1. A plurality of vortex-forming grooves 424 may be formed. The vortex-forming grooves 424 may be disposed to be spaced apart from each other in a circumferential direction of the rotor base plate 420. The vortex-forming grooves 424 may be disposed at equal intervals. The vortex-forming grooves 424 may be formed in the same shape. The vortex-forming grooves 424 may be formed radially about an axis of the rotor base plate 420.

The vortex-forming groove 424 may be formed to have different depths depending on a position where it is formed on the rotor base plate 420. The vortex-forming groove 424 may be formed such that a depth of an inner region adjacent to a center of the rotor base plate 420 and a depth of an outer region adjacent to an outer circumferential surface of the rotor base plate 420 are different from each other. For example, the vortex-forming groove 424 may be formed such that the depth of the outer region is greater than the depth of the inner region. Specifically, the vortex-forming groove 424 may be formed in a shape in which the depth gradually increases from the inner region toward the outer region.

In addition, the vortex-forming groove 424 may be formed such that a width of an inner region adjacent to a center of the rotor base plate 420 and a width of an outer region adjacent to an outer circumferential surface of the rotor base plate 420 are different from each other. Specifically, it may be formed in a shape in which the width gradually widens from the inner region toward the outer region.

The protruding member 426 is formed on the rotor base plate 420 to generate turbulence during rotation of the rotor 400. The protruding member 426 may be formed on the second surface P2. The protruding member 426 may be disposed on the vortex-forming groove 424. The protruding member 426 may be formed to be adjacent to the outer region, among the inner region adjacent to the center of the rotor base plate 420 and the outer region adjacent to the outer circumferential surface of the rotor base plate 420. A plurality of protruding members 426 may be formed. For example, the protruding members 426 may be formed in a number corresponding to the vortex-forming grooves 424. The protruding member 426 may have an adhesive discharge hole 4262 formed therein, the adhesive discharge hole 4262 communicating with the permanent magnet coupling groove 422 so that excess adhesive is discharged when the permanent magnet 440 is coupled to the permanent magnet coupling groove 422 with an adhesive.

The rotor base plate 420 may have a through-hole 428 formed therein. The through-hole 428 may be used as a passage through which air between the rotor 400 and the stator 300 is circulated while the rotor 400 rotates. The through-hole 428 may be formed in the axial direction of the rotor base plate 420. The through-hole 428 may be formed on the vortex-forming groove 424. A plurality of through-holes 428 may be formed. For example, the through-holes 428 may be formed in a number corresponding to the vortex-forming grooves 424. Since the through-hole 428 should be formed at a position not overlapping with the permanent magnet 440 in the axial direction on the rotor base plate 420, the through-hole 428 may be formed to be adjacent to the inner region, among the inner region adjacent to the center of the rotor base plate 420 and the outer region adjacent to the outer circumferential surface of the rotor base plate 420.

According to the above-described example, in the rotor base plate 420 according to an embodiment of the present invention, the plurality of vortex-forming grooves 424 are formed on a side opposite to the surface to which the permanent magnet 440 is coupled, so that a vortex is generated when the rotor 400 rotates, thereby providing an effect of improving cooling efficiency inside the motor 10.

In addition, since the rotor 400 having the vortex-forming grooves 424 has an irregular shape, a force can be dispersed at various angles when the rotor 400 rotates, thereby preventing bending of the rotor 400 and providing an effect of uniformly maintaining an air gap between the stator 300 and the permanent magnet 440 disposed on the rotor 400.

In addition, since the plurality of through-holes are formed in the rotor base plate 420, heated air between the rotor 400 and the stator 300 can be circulated, thereby providing an effect of improving cooling efficiency inside the motor 10.

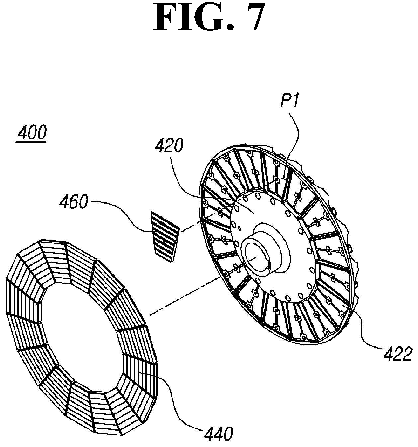

Hereinafter, the permanent magnet 440 will be described in more detail with reference to FIGS. 7 to 10.

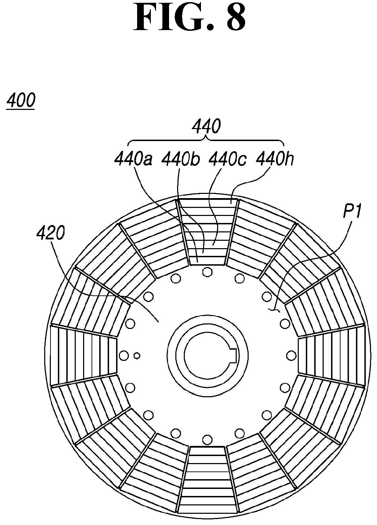

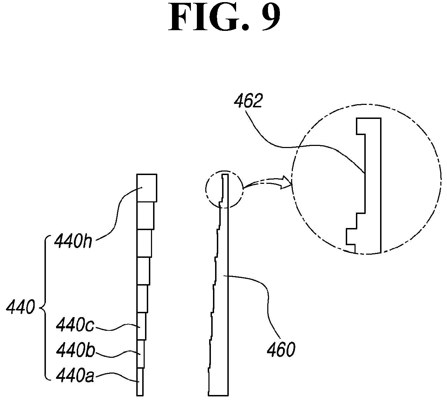

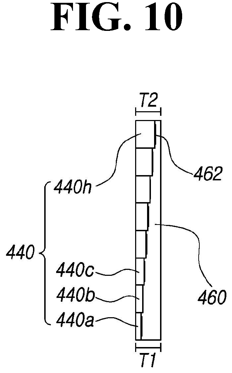

FIG. 7 is an exploded perspective view of the rotor illustrated in FIG. 2, FIG. 8 is a front view of the first surface of the rotor illustrated in FIG. 2, FIG. 9 is a side view of the permanent magnet and the fixing member illustrated in FIG. 7, and FIG. 10 is a side view illustrating a state in which the permanent magnet and the fixing member of FIG. 9 are coupled.

Referring to FIGS. 7 to 10, the permanent magnet 440 may be formed by a combination of a plurality of sub-permanent magnets 440a, 440b, 440c, ..., 440h having different sizes from each other. Although it is illustrated in an embodiment of the present invention that eight sub-permanent magnets 440a, 440b, 440c, ..., 440h are combined to form one permanent magnet 440, the number to be combined is not limited thereto. Hereinafter, an example in which the permanent magnet 440 is a combination of the plurality of sub-permanent magnets 440a, 440b, 440c, ..., 440h will be described.

The plurality of sub-permanent magnets 440a, 440b, 440c, ..., 440h may be aligned such that the same polarity faces the same surface. The plurality of sub-permanent magnets 440a, 440b, 440c, ..., 440h may each be fixed with an adhesive. The plurality of sub-permanent magnets 440a, 440b, 440c, ..., 440h may be formed in different sizes. For example, they may be aligned such that a magnet having the strongest magnetic force among the plurality of sub-permanent magnets 440a, 440b, 440c, ..., 440h is disposed at a position where the intensity of the magnetic field is strongest.

First, as illustrated in FIG. 8, the plurality of sub-permanent magnets 440a, 440b, 440c, ..., 440h may be formed in different widths so that each magnet has a different weight and magnetic force. The plurality of sub-permanent magnets 440a, 440b, 440c, ..., 440h may be arranged such that the combined permanent magnet has a trapezoidal shape. Among the plurality of sub-permanent magnets 440a, 440b, 440c, ..., 440h, the sub-permanent magnet 440h disposed in the outer region adjacent to the outer periphery of the rotor may be arranged to have a larger width than the sub-permanent magnet 440a disposed in the inner region adjacent to the center of the rotor base plate 420. For example, the plurality of sub-permanent magnets 440a, 440b, 440c, ..., 440h may be arranged to have widths gradually increasing from the inner region toward the outer region, so that the outermost sub-permanent magnet 440h is formed to have the largest width.

In addition, as illustrated in FIG. 9, the plurality of sub-permanent magnets 440a, 440b, 440c, ..., 440h may have side surfaces formed in different thicknesses so that each magnet has a different weight and magnetic force. The plurality of sub-permanent magnets 440a, 440b, 440c, ..., 440h may be arranged in a multi-step shape. Among the plurality of sub-permanent magnets 440a, 440b, 440c, ..., 440h, the sub-permanent magnet 440h disposed in the outer region adjacent to the outer periphery of the rotor may be arranged to have a larger thickness than the sub-permanent magnet 440a disposed in the inner region adjacent to the center of the rotor base plate 420. For example, the plurality of sub-permanent magnets 440a, 440b, 440c, ..., 440h may be arranged in a step shape having a thickness gradually increasing from the inner region toward the outer region. The plurality of sub-permanent magnets 440a, 440b, 440c, ..., 440h may be arranged such that surfaces facing the stator 300 are spaced apart from the stator 300 at the same interval, and may be arranged to have different thicknesses in a direction in which they are coupled to the rotor base plate 420.

In this case, the rotor 400 may further include a fixing member 460 fixing the permanent magnet 440 to the permanent magnet coupling groove 422.

The fixing member 460 is provided between the plurality of sub-permanent magnets 440a, 440b, 440c, ..., 440h and the rotor base plate 420. The fixing member 460 supports and fixes the plurality of sub-permanent magnets 440a, 440b, 440c, ..., 440h to the rotor base plate 420. The fixing member 460 fixes the plurality of sub-permanent magnets 440a, 440b, 440c, ..., 440h, which are arranged in different thicknesses, to the permanent magnet coupling groove 422 so that they have the same interval from the stator 300.

A plurality of fixing members 460 may be provided. The fixing members 460 may be formed in a number corresponding to the permanent magnet coupling grooves 422. The fixing member 460 may be coupled to the permanent magnet coupling groove 422 by a bolt.

The fixing member 460 may fix the plurality of sub-permanent magnets 440a, 440b, 440c, ..., 440h. The fixing member 460 may be formed in a shape inversely corresponding to the plurality of sub-permanent magnets 440a, 440b, 440c, ..., 440h. When the plurality of sub-permanent magnets 440a, 440b, 440c, ..., 440h are arranged in a step shape having gradually increasing thicknesses, the fixing member 460 may be formed in an inverse step shape having gradually decreasing thicknesses. The fixing member 460 may be formed such that, in a state of being fixed to the plurality of sub-permanent magnets 440a, 440b, 440c, ..., 440h, a sum of thicknesses is constant. For example, as illustrated in FIG. 10, a sum T1 of thicknesses of the inner region of the fixing member 460 and the sub-permanent magnet 440a may be equal to a sum T2 of thicknesses of the outer region of the fixing member 460 and the sub-permanent magnet 440h.

The plurality of sub-permanent magnets 440a, 440b, 440c, ..., 440h may be coupled to the fixing member 460 with an adhesive. When the plurality of sub-permanent magnets 440a, 440b, 440c, ..., 440h are coupled to the fixing member 460 with an adhesive, a constant air gap with the stator 300 cannot be maintained due to adhesive applied in an excessive amount. Accordingly, the fixing member 460 may have an adhesive discharge groove 462 formed therein, through which excess adhesive is discharged when the plurality of sub-permanent magnets 440a, 440b, 440c, ..., 440h are coupled.

The adhesive discharge groove 462 may be formed in a surface to which the plurality of sub-permanent magnets 440a, 440b, 440c, ..., 440h are coupled. The adhesive discharge grooves 462 may be formed in a number corresponding to the plurality of sub-permanent magnets 440a, 440b, 440c, ..., 440h.

Although the above example has been described as one permanent magnet 440 being a combination of the plurality of sub-permanent magnets 440a, 440b, 440c, ..., 440h, the plurality of sub-permanent magnets 440a, 440b, 440c, ..., 440h may be formed integrally. That is, one permanent magnet 440 may be formed to have different widths and thicknesses for respective regions depending on the intensity of the magnetic field.

According to the above-described example, the plurality of sub-permanent magnets 440a, 440b, 440c, ..., 440h are formed in different sizes, so that magnets having different magnetic forces are disposed depending on the intensity of the magnetic field, thereby providing an effect of improving rotational efficiency.

In addition, since the thickness of the fixing member 460 is formed in a shape inversely corresponding to the permanent magnet 440, a fixing force between the rotor 400 and the permanent magnet 440 can be improved, and the permanent magnet 440 and the stator 300 can maintain a constant air gap, thereby providing an effect of improving rotational efficiency.

In the above description, even though all components constituting the embodiments of the present invention have been described as being combined into one or operating in combination, the present invention is not necessarily limited to such embodiments. That is, within the scope of the object of the present invention, all of the components may be selectively combined into one or more and operate. In addition, terms such as "include," "comprise," or "have" described above mean that the corresponding component may be inherent unless there is a description to the contrary, and thus should be interpreted as being able to further include other components rather than excluding other components. All terms, including technical or scientific terms, have the same meaning as commonly understood by a person of ordinary skill in the art to which the present invention belongs, unless otherwise defined. Commonly used terms, such as those defined in a dictionary, should be interpreted as having a meaning consistent with the contextual meaning of the related art, and are not to be interpreted in an ideal or excessively formal sense unless explicitly defined in the present invention.

The above description is merely illustrative of the technical idea of the present invention, and various modifications and variations will be possible by those skilled in the art to which the present invention belongs without departing from the essential characteristics of the present invention. Therefore, the embodiments disclosed in the present invention are not intended to limit the technical idea of the present invention but to describe it, and the scope of the technical idea of the present invention is not limited by these embodiments. The protection scope of the present invention should be interpreted by the claims below, and all technical ideas within the equivalent scope thereof should be interpreted as being included in the scope of rights of the present invention.

## Claims

1. An axial flux motor comprising:
a motor housing defining an internal space;
a shaft rotatably provided in the internal space;
a stator disposed to be fixed to the motor housing in the internal space, the stator including a stator core, a coil, and a stator bracket; and
a rotor fixedly coupled to the shaft and disposed to face the stator in an axial direction, the rotor including a rotor base plate and a plurality of permanent magnets,
wherein the rotor base plate includes a first surface facing the stator and a second surface opposite to the first surface, and has a vortex-forming groove formed in the second surface to generate a vortex.

2. The axial flux motor of claim 1, wherein the vortex-forming groove is provided in a plurality, the plurality of vortex-forming grooves being spaced apart from each other in a circumferential direction.

3. The axial flux motor of claim 2, wherein the vortex-forming grooves are formed radially about an axis of the rotor base plate.

4. The axial flux motor of claim 1, wherein the vortex-forming groove is formed such that a depth of an inner region adjacent to a center of the rotor and a depth of an outer region adjacent to an outer periphery of the rotor are different from each other.

5. The axial flux motor of claim 4, wherein the vortex-forming groove is formed such that the depth of the outer region is greater than the depth of the inner region.

6. The axial flux motor of claim 1, wherein the vortex-forming groove is formed such that a width of an outer region adjacent to an outer periphery of the rotor is wider than a width of an inner region adjacent to a center of the rotor.

7. The axial flux motor of claim 1, wherein the rotor base plate has a protruding member formed on the vortex-forming groove to generate turbulence.

8. The axial flux motor of claim 7, wherein the protruding member is formed within the vortex-forming groove to be adjacent to an outer region rather than an inner region of the rotor.

9. The axial flux motor of claim 1, wherein the rotor base plate has a through-hole formed in the vortex-forming groove to circulate air between the rotor and the stator.

10. An axial flux motor comprising:
a motor housing defining an internal space;
a shaft rotatably provided in the internal space;
a stator disposed to be fixed to the motor housing in the internal space, the stator including a stator core, a coil, and a stator bracket; and
a rotor fixedly coupled to the shaft and disposed to face the stator in an axial direction, the rotor including a rotor base plate and a plurality of permanent magnets,
wherein each of the permanent magnets is formed such that a thickness of an inner region adjacent to a center of the rotor and a thickness of an outer region adjacent to an outer periphery of the rotor are different from each other.

11. The axial flux motor of claim 10, wherein each of the permanent magnets is formed such that the thickness of the outer region is greater than the thickness of the inner region.

12. The axial flux motor of claim 11, wherein each of the permanent magnets is formed to have a thickness that gradually increases from the inner region toward the outer region.

13. The axial flux motor of claim 10, wherein each of the permanent magnets is formed to have a width that gradually widens from the inner region toward the outer region.

14. The axial flux motor of claim 10, wherein each of the permanent magnets is provided as a combination of a plurality of sub-permanent magnets having different sizes from each other, and is arranged in a step shape.

15. The axial flux motor of claim 10, wherein the rotor further includes a fixing member coupling each of the permanent magnets to the rotor base plate, and the fixing member is formed such that a surface contacting each of the permanent magnets has a shape inversely corresponding thereto.

16. The axial flux motor of claim 15, wherein the fixing member is formed such that a sum of thicknesses of the fixing member and each of the permanent magnets is constant.

17. The axial flux motor of claim 15, wherein the fixing member has a discharge groove formed in a contact surface with each of the permanent magnets, the discharge groove discharging excess adhesive when each of the permanent magnets is coupled.
